# EUROPÄISCHE PATENTANMELDUNG

(11) **EP 2 249 438 A2**
(43) Veröffentlichungstag der Anmeldung: **10.11.2010**
(21) Anmeldenummer: 10003058.4
(22) Anmeldetag: 23.03.2010
(51) Int. Cl.: H01R 13/506

(54) **Steckdose für eine mehrpolige Steckverbindung**

(30) Priorität: 06.05.2009 DE 202009006467 U
(71) Anmelder: ConWys AG, 6023 Rothenburg (CH)
(72) Erfinder: Wystron, Alexander, 6003 Luzern (CH)
(74) Vertreter: Stenger, Watzke & Ring

(57) **Zusammenfassung**

Die Erfindung betrifft eine Steckdose für eine mehrpolige Steckverbindung, insbesondere für den elektrischen Anschluss eines Kraftfahrzeuganhängers an einem Kraftfahrzeug, mit einem Dosengehäuse (2) und einem davon aufnehmbaren Kontaktträgereinsatz (3). Um eine Steckdose zu erhalten, die eine vereinfachte Montage ermöglicht und die darüber hinaus bei gleichzeitig niedriger Bauhöhe einen hinreichend großen Verlegeraum für Anschlusskabel zur Verfügung stellt, wird mit der Erfindung vorgeschlagen, dass der Kontaktträgereinsatz endseitig sich radial erstreckende Randabschnitte (4, 5, 6) aufweist, die im endmontierten Zustand von hierzu korrespondierend ausgebildeten Aufnahmen (7, 8, 9) des Dosengehäuses (2) umgriffen sind und so den Kontaktträgereinsatz in axialer Richtung (19) gegenüber dem Dosengehäuse (2) abstützen.

## Beschreibung

Die Erfindung betrifft eine Steckdose für eine mehrpolige Steckverbindung, insbesondere für den elektrischen Anschluss eines Kraftfahrzeuganhängers an einem Kraftfahrzeug, mit einem Dosengehäuse und einem davon aufnehmbaren Kontaktträgereinsatz.

Steckdosen der vorgenannten, das heißt gattungsgemäßen Art sind aus dem Stand der Technik an sich gut bekannt, weshalb es eines gesonderten druckschriftlichen Nachweises an dieser Stelle nicht bedarf.

Der Kontaktträgereinsatz ist als ein- oder mehrstückiges Kunststoffteil ausgebildet. Er dient der Aufnahme von mit elektrischen Anschlussleitungen zu versehenen elektrischen Steckkontakten. Dabei stellt der Kontaktträgereinsatz je Steckkontakt eine Aufnahme-, das heißt Durchgangsöffnung zur Verfügung.

Im endfertig montierten Zustand ist der Kontaktträgereinsatz vom Dosengehäuse aufgenommen. Dieses ist in aller Regel mit einer beispielsweise an einem Kraftfahrzeug angeordneten Anschluss- oder Montageplatte verschraubt. Das Dosengehäuse kann mit einem verschwenkbar hieran angeordneten Verschlussdeckel ausgerüstet sein. Dieser trägt dosengehäuseseitig eine Dichtung, so dass das Dosengehäuse bei verschlossenem Deckel gegenüber dem Eintrag von Schmutz und/oder Feuchtigkeit abgedichtet ist.

Für eine bestimmungsgemäße Ingebrauchnahme der Steckdose ist der Deckel des Dosengehäuses zu verschwenken. Alsdann kann ein Stecker zur Kontaktierung der vom Kontaktträgereinsatz gehaltenen Steckkontakte in das Dosengehäuse eingeführt werden. Um sicherzustellen, dass sich der Kontaktträgereinsatz sowohl bei einem Einführen eines Steckers in das Dosengehäuse als auch bei einem Herausziehen desselben aus dem Dosengehäuse nicht relativ gegenüber dem Dosengehäuse in axialer Richtung verschiebt, bedarf es der axialen Abstützung des Kontaktträgereinsatzes gegenüber dem Dosengehäuse. Aus dem Stand der Technik sind diesbezüglich unterschiedlichste Konstruktionen bekannt geworden.

Die DE 298 14 965 U1 beschreibt eine Steckdose für eine mehrpolige Steckverbindung, dergemäß zur axialen Abstützung des Kontaktträgereinsatzes relativ gegenüber dem Dosengehäuse in Einsteckrichtung eines Steckers ein Stützkörper zum Einsatz kommt. Dieser Stützkörper ist gegenüber dem Dosengehäuse zu verrasten und trägt seinerseits Rasthaken zur Abstützung des Kontaktträgereinsatzes.

Aus dem Stand der Technik sind auch Konstruktionen bekannt geworden, so zum Beispiel aus der DE 78 12 822, dergemäß zur axialen Abstützung des Kontaktträgereinsatzes in Einsteckrichtung eines Steckers am Kontaktträgereinsatz einstückig angeordnete Stützbeine vorgesehen sind, die den Kontaktträgereinsatz gegenüber der Anschluss- oder Montageplatte abstützen, mit welcher das Dosengehäuse zu verbinden ist.

Obgleich sich die vorbekannten Konstruktionen im alltäglichen Praxiseinsatz bewährt haben, besteht Verbesserungsbedarf, insbesondere mit Blick auf eine vereinfachte Montage.

Es ist deshalb die Aufgabe der Erfindung, eine gegenüber dem Stand der Technik verbesserte Steckdose vorzuschlagen, die eine vereinfachte Montage ermöglicht und die darüber hinaus bei gleichzeitig niedriger Bauhöhe einen hinreichend großen Verlegeraum für Anschlusskabel zur Verfügung stellt.

Zur Lösung dieser Aufgabe wird mit der Erfindung eine Steckdose der vorgenannten Art vorgeschlagen, die sich dadurch auszeichnet, dass der Kontaktträgereinsatz endseitig sich radial erstreckende Randabschnitte aufweist, die im endmontierten Zustand von hierzu korrespondierend ausgebildeten Aufnahme des Dosengehäuses umgriffen sind und so den Kontaktträgereinsatz in axialer Richtung gegenüber dem Dosengehäuse abstützen.

Zum Zwecke der axialen Abstützung des Kontaktträgereinsatzes gegenüber dem Dosengehäuse verfügt der Kontaktträgereinsatz über endseitig desselben ausgebildete Randabschnitte, die sich in radialer Richtung erstrecken. Für eine optimierte Kraftverteilung sind wenigstens zwei Randabschnitte vorgesehen. Bevorzugterweise verfügt der Kontaktträgereinsatz über mehr als zwei Randabschnitte, beispielsweise drei oder vier Randabschnitte.

Im endmontierten Zustand greifen die Randabschnitte des Kontaktträgereinsatzes in vom Dosengehäuse bereitgestellte Aufnahmen ein, die die Randabschnitte jeweils axial umschließen. Damit ist der Kontaktträgereinsatz im endmontierten Zustand relativ gegenüber dem Dosengehäuse axial gesichert, so dass eine Verschiebung des Kontaktträgereinsatzes relativ gegenüber dem Dosengehäuse sowohl in Einsteckrichtung eines Steckers als auch in umgekehrter Richtung hierzu nicht möglich ist. Eine ungewollte Verschiebung des Kontaktträgereinsatzes gegenüber dem Dosengehäuse ist so unterbunden, und zwar sowohl bei einem Einstecken eines Steckers in die Steckdose als auch bei einem Herausziehen eines Steckers aus der Steckdose.

Die Aufnahmen des Dosengehäuses für die Randabschnitte des Kontaktträgereinsatzes sind bevorzugterweise spaltförmig ausgebildet. In diese Spalte tauchen die Randabschnitte des Kontaktträgereinsatzes bei einem Verdrehen des Kontaktträgereinsatzes relativ gegenüber dem Dosengehäuse ein. Im endmontierten Zustand ergibt sich so ein axiales Umgreifen der Randabschnitte, wie vorstehend bereits beschrieben.

Zwecks Demontage ist der Kontaktträgereinsatz relativ gegenüber dem Dosengehäuse zurückzuverdrehen. Die Randabschnitte des Kontaktträgereinsatzes fahren dann aus den Spaltöffnungen der dosengehäuseseitigen Aufnahmen wieder heraus, was eine Trennung von Dosengehäuse einerseits und Kontaktträgereinsatz andererseits erlaubt.

Um eine relative Verdrehbewegung des Kontaktträgereinsatzes relativ gegenüber dem Dosengehäuse zu verhindern, ist gemäß einem weiteren Merkmal der Erfindung vorgesehen, dass der Kontaktträgereinsatz einen radial verfahrbaren Nocken trägt. Im endmontierten Zustand greift dieser Nocken in eine vom Dosengehäuse bereitgestellte Ausnehmung ein, so dass eine mögliche Verdrehbewegung des Kontaktträgereinsatzes relativ gegenüber dem Dosengehäuse verhindert ist.

Der dem Verdrehschutz dienende Nocken ist radial verfahrbar am Kontaktträgereinsatz angeordnet. Im endmontierten Zustand ist der Nocken radial ausgefahren und in der korrespondierend hierzu ausgebildeten Ausnehmung des Dosengehäuses verrastet. Eine relative Verdrehbewegung des Kontaktträgereinsatzes gegenüber dem Dosengehäuse ist dann nicht möglich. Wird der Nocken radial zurückverfahren, das heißt aus der dosengehäuseseitigen Ausnehmung herausgerückt, kann eine relative Verdrehbewegung des Kontaktträgereinsatzes gegenüber dem Dosengehäuse zwecks Demontage vorgenommen werden.

Wie sich aus den vorstehenden Darlegungen ergibt, verfügt der Kontaktträgereinsatz einerseits über Randabschnitte und andererseits über einen Nocken. Im Zusammenspiel mit den dafür dosengehäuseseitig vorgesehenen Aufnahmen dienen die Randabschnitte des Kontaktträgereinsatzes dazu, diesen im endmontierten Zustand axial relativ gegenüber dem Dosengehäuse zu sichern. Der am Kontaktträgereinsatz angeordnete Nocken dient im Zusammenspiel mit der dosengehäuseseitig vorgesehenen Ausnehmung indes dafür, eine Verdrehbewegung des Kontaktträgereinsatzes relativ gegenüber dem Dosengehäuse zu verhindern, um so sicherzustellen, dass der Kontaktträgereinsatz nicht ungewollt aus seiner endmontierten Stellung in seine Demontagestellung verfährt, gemäß welcher die Randabschnitte des Kontaktträgereinsatzes aus den zugehörigen Aufnahmen des Dosengehäuses herausverfahren sind.

Der dem Verdrehschutz des Kontaktträgereinsatzes relativ gegenüber dem Dosengehäuse dienende Nocken ist bevorzugterweise endseitig einer Federzunge angeordnet. Die radiale Verfahrbarkeit des Nockens ist so in einfacher Weise realisiert. Darüber hinaus dient die Federzunge dazu, den Nocken automatisch in der dosengehäuseseitigen Ausnehmung zu verrasten, sobald der Kontaktträgereinsatz seine Verdrehendstellung gegenüber dem Dosengehäuse einnimmt.

Die den Nocken tragende Federzunge ist gemäß einem weiteren Merkmal der Erfindung umfangsseitig am Kontaktträgereinsatz angeordnet, und zwar zwischen zwei in Umfangsrichtung nebeneinander ausgebildeten Randabschnitten. Es sind bevorzugterweise der Anzahl der Randabschnitte entsprechend viele Rastzungen mit daran angeordneten Nocken vorgesehen. Für die erfindungsgemäße Funktion ist das Vorhandensein nur eines Nockens zwecks Verdrehsicherung aber ausreichend.

Die vom Dosengehäuse bereitgestellte Ausnehmung zwecks Aufnahme des kontaktträgerseitigen Nockens ist gemäß einem weiteren Merkmal der Erfindung durch zwei in Umfangsrichtung benachbart zueinander ausgebildete Stege gebildet. Einer dieser beiden Stege verfügt bevorzugterweise über eine Anlaufschräge, so dass bei einer Überführung des Kontaktträgereinsatzes in seine Endstellung durch Verdrehen des Kontaktträgereinsatzes relativ gegenüber dem Dosengehäuse der kontaktträgerseitige Nocken durch Auflaufen auf die Anlaufschräge radial in Richtung auf den Kontaktträgereinsatz in einfacher Weise zurückgeführt wird. Da der Nocken endseitig einer Federzunge angeordnet ist, steht der Nocken im Zuge eines solchen Zurückführens unter Federvorspannung, was ein Einrasten des Nockens in die dafür vorgesehene Ausnehmung des Dosengehäuses in automatischer Weise realisiert, sobald der Kontaktträgereinsatz relativ gegenüber dem Dosengehäuse so weit verdreht ist, dass der Nocken in Radialrichtung gegenüber der dosengehäuseseitigen Ausnehmung zu liegen kommt.

Die Randabschnitte des Kontaktträgereinsatzes verfügen jeweils über einen sich radial erstreckenden Fortsatz. Ein jeder dieser Fortsätze ist in einem zugehörigen Nutabschnitt des Dosengehäuses geführt, wobei ein jeder Nutabschnitt durch zwei Anschläge begrenzt ist. Im Zusammenspiel der Fortsätze einerseits und den jeweils zugehörigen Anschlägen andererseits ist sichergestellt, dass der Kontaktträgereinsatz nur in einem bestimmten, fest vorgegebenen Winkelbereich relativ gegenüber dem Dosengehäuse verdreht werden kann. In der einen möglichen Endstellung befindet sich der Kontaktträgereinsatz in seiner endmontierten Lage, die sich dadurch auszeichnet, dass der Kontaktträgereinsatz in axialer Richtung gegenüber dem Dosengehäuse gesichert ist und dass eine ungewollte Verdrehbewegung des Kontaktträgereinsatzes relativ gegenüber dem Dosengehäuse gleichfalls unterbunden ist. In der anderen möglichen Endstellung befindet sich der Kontaktträgereinsatz in einer demontierten Lage relativ gegenüber dem Dosengehäuse, was bedeutet, dass der Kontaktträgereinsatz in axialer Richtung aus dem Dosengehäuse herausgenommen werden kann bzw. dass eine Verdrehbewegung des Kontaktträgereinsatzes zur Erreichung der endmontierten Lage möglich ist.

Die erfindungsgemäß ausgestaltete Steckdose zeichnet sich insbesondere durch ihre vereinfachte Handhabung sowohl im Rahmen einer Montage als auch im Rahmen einer Demontage aus. Der Kontaktträgereinsatz ist ohne Zwischenordnung zusätzlicher Bauelemente, wie zum Beispiel Stützkörper oder dergleichen in axialer Richtung in das Dosengehäuse einzuführen. In einem zweiten und letzten Montageschritt bedarf es nur noch einer einfach durchzuführenden Verdrehbewegung des Kontaktträgereinsatzes relativ gegenüber dem Dosengehäuse, und zwar bis dieser seine endmontierte Lage relativ gegenüber dem Dosengehäuse erreicht, in welcher sich der Kontaktträgereinsatz in axialer Richtung relativ gegenüber dem Dosengehäuse abstützt. Dabei kann der Kontaktträgereinsatz in einfacher Weise bis auf Anschlag relativ gegenüber dem Dosengehäuse verdreht werden, so dass eine Fehlbedienung auszuschließen ist. Zwecks Demontage ist der einer Verdrehsicherung dienende Nocken entgegen seiner auf ihn einwirkenden Federkraft zurückzuverschwenken, so dass eine Verdrehbewegung des Kontaktträgereinsatzes relativ gegenüber dem Dosengehäuse zurück in die demontierte Stellung des Kontaktträgereinsatzes möglich ist.

Ein weiterer Vorteil der erfindungsgemäßen Ausgestaltung ergibt sich dadurch, dass es zur axialen Abstützung des Kontaktträgereinsatzes relativ gegenüber dem Dosengehäuse keiner zusätzlichen Stützbeine, Rasthaken oder dergleichen bedarf. Im Ergebnis baut der Kontaktträgereinsatz in Höhenrichtung in Relation zum Dosengehäuse wenig auf, was es erlaubt, ein vergleichsweise flach ausgebildetes Dosengehäuse zu verwenden. Darüber hinaus verbleibt aufgrund der geringen Bauhöhe des Kontaktträgereinsatzes ein vergleichsweise großer Montageraum zwischen Anschluss- bzw. Montageplatte einerseits und Kontaktträgereinsatz andererseits, so dass die aus dem Kontaktträgereinsatz rückwärts herausgeführten Anschlussleitungen für eine seitliche Abführung aus dem Dosengehäuse umgelenkt werden können. Die erfindungsgemäß ausgebildete Steckdose eignet sich damit sowohl für die rückwärtige als auch für die seitliche Kabelabführung, und dies bei gleichzeitig vergleichsweise geringer Bauhöhe des Dosengehäuses.

Weitere Merkmale und Vorteile der Erfindung ergeben sich aus der nachfolgenden Beschreibung anhand der Fign. Dabei zeigen
- Fig. 1: ein Dosengehäuse in schematisch perspektivischer Ansicht von oben;
- Fig. 2: das Dosengehäuse nach Fig. 1 in einer schematisch perspektivischen Ansicht von unten;
- Fig. 3: einen Kontaktträgereinsatz in einer schematisch perspektivischen Darstellung von der Seite;
- Fig. 4: den Kontaktträgereinsatz nach Fig. 3 in einer schematisch perspektivischen Ansicht von schräg oben;
- Fig. 5: eine erfindungsgemäße Steckdose in einer schematisch perspektivischen Darstellung mit einem gegenüber dem Dosengehäuse unverrasteten Kontaktträgereinsatz und
- Fig. 6: die Steckdose nach Fig. 5 in einer schematisch perspektivischen Darstellung mit einem gegenüber dem Dosengehäuse verrasteten Kontaktträgereinsatz.

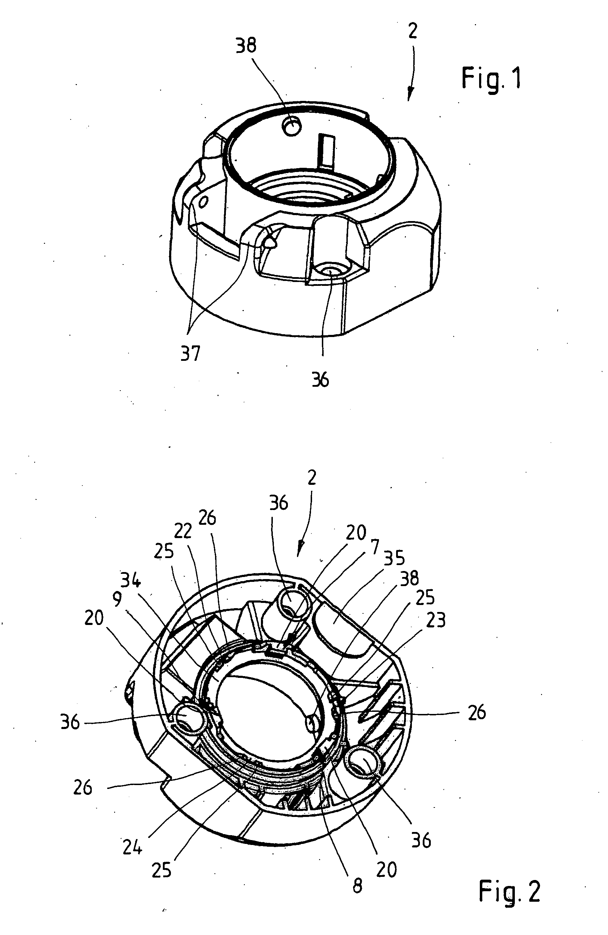

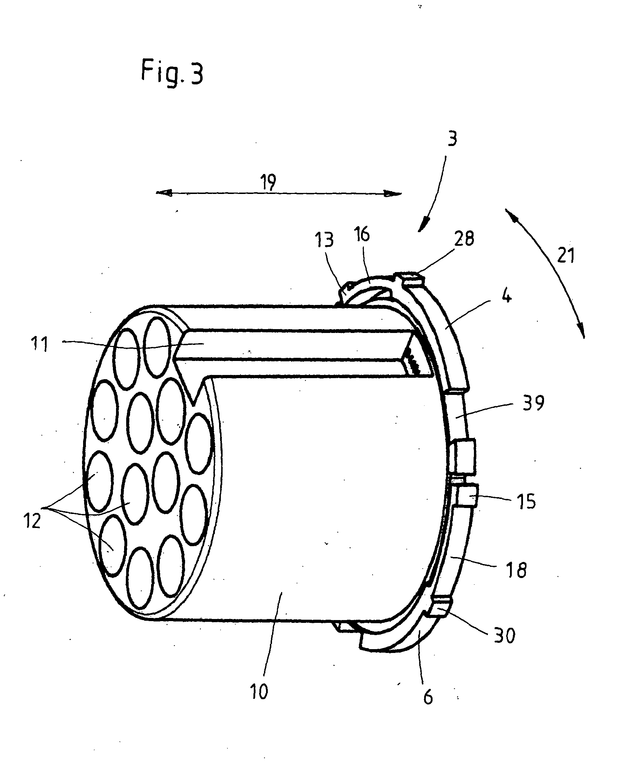

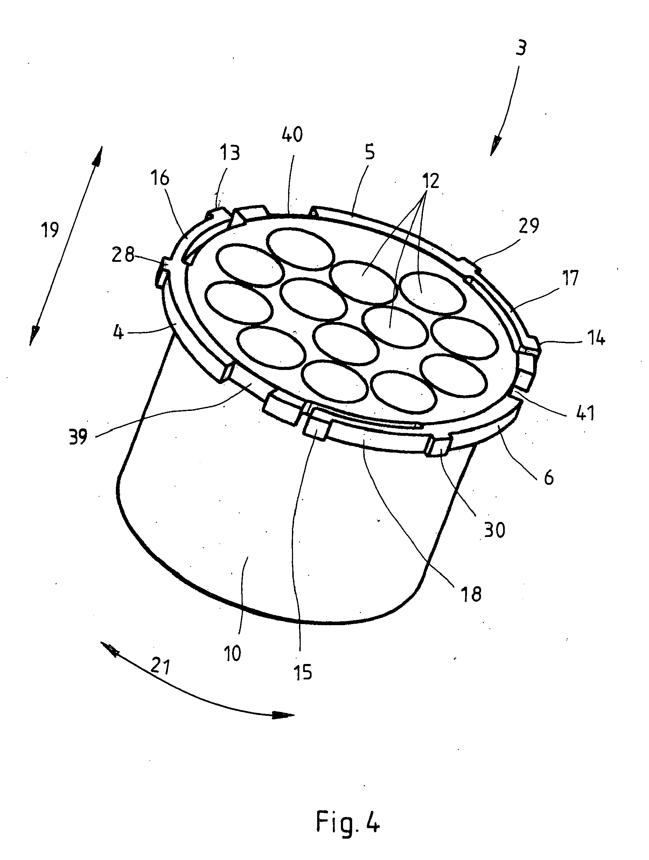

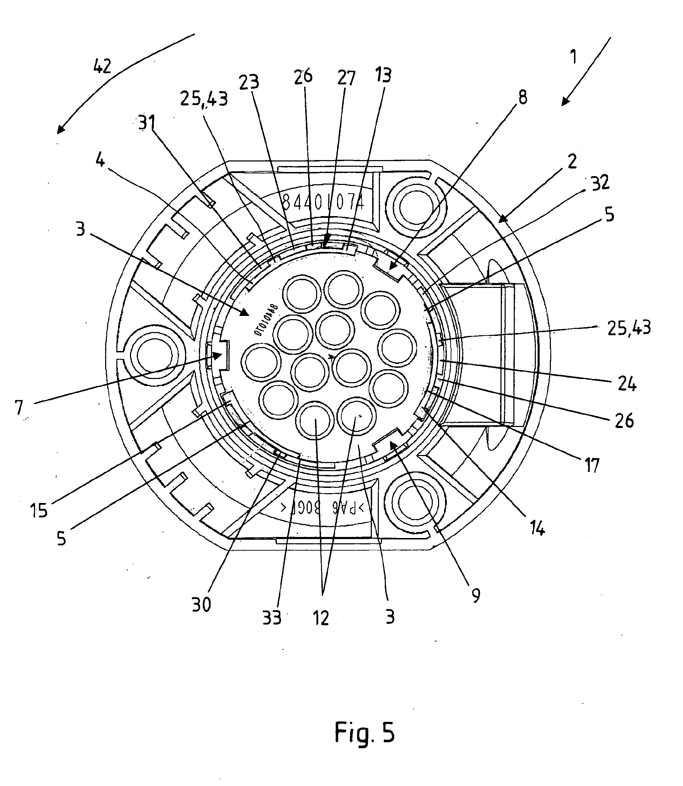

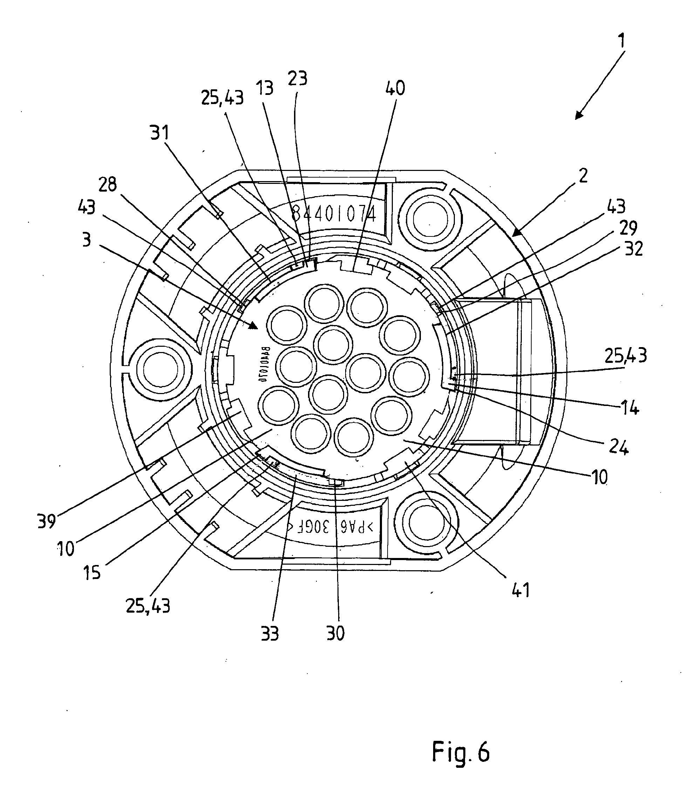

Die erfindungsgemäße Steckdose 1 verfügt über ein Dosengehäuse 2 und einen Kontaktträgereinsatz 3. Der Kontaktträgereinsatz 3 ist für eine bestimmungsgemäße Verwendung der Steckdose 1 innerhalb des Dosengehäuses 2 anzuordnen, wobei Fig. 5 eine unverrastete Stellung von Dosengehäuse 2 und Kontaktträgereinsatz 3 und Fig. 6 eine verrastete Stellung von Kontaktträgereinsatz 3 und Dosengehäuse 2 zeigt. Die Fign. 1 und 2 zeigen in unterschiedlichen Ansichten das Dosengehäuse 2. Den Fign. 3 und 4 ist in Alleinstellung der Kontaktträgereinsatz 3 zu entnehmen.

Der Kontaktträgereinsatz 3 ist als einstückiges Kunststoffteil ausgebildet. Er verfügt über einen Grundkörper 10, der Durchgangsöffnungen 12 für mit elektrischen Anschlussleitungen zu versehenen elektrischen Steckkontakten aufweist. Der Grundkörper 10 trägt zudem eine Kodierungsnut 11, die der Aufnahme einer Kodierungsnase eines in den Fign. nicht näher gezeigten Steckers dient. Das Zusammenspiel von Kodierungsnut 11 und Kodierungsnase stellt sicher, dass ein in die Steckdose 1 einzuführender Stecker lagerichtig in die Steckdose 1 eingeführt wird.

Der Kontaktträgereinsatz 3 verfügt endseitig über am Grundkörper 10 angeordnete Randabschnitte 4, 5 und 6, wie sich dies insbesondere aus der Darstellung nach Fig. 4 ergibt. Jeder Randabschnitt 4, 5 und 6 trägt jeweils einen Fortsatz 28, 29 und 30, die sich mit Bezug auf den kreisförmigen Querschnitt des Grundkörpers 10 des Kontaktträgereinsatzes 3 radial erstrecken.

In Umfangsrichtung 21 des Grundkörpers 10 des Kontaktträgereinsatzes 3 schließt sich an jeden Randabschnitt 4, 5 und 6 jeweils eine Federzunge 16, 17 und 18 an, wobei der Randabschnitt 4 in die Federzunge 16, der Randabschnitt 5 in die Federzunge 17 und der Randabschnitt 6 in die Federzunge 18 übergeht. Eine jede dieser Federzungen 16, 17 und 18 trägt endseitig einen Nocken 13, 14 und 15, und zwar am jeweils freien Ende, so dass die Nocken 13, 14 und 15 durch die Federzungen 16, 17 und 18 federbelastet radial ein-und ausschwenken können. Wie die Darstellung nach Fig. 4 erkennen lässt, stellt die Federzunge 16 den Nocken 13, die Federzunge 17 den Nocken 14 und die Federzunge 18 den Nocken 15 bereit.

Wie insbesondere der Darstellung nach Fig. 4 ferner entnommen werden kann, stellt jeder der Randabschnitte 4, 5 und 6 jeweils eine Aussparung 39, 40 und 41 in Form einer Unterbrechung des jeweiligen Randabschnittes in Umfangsrichtung 21 bereit. Dabei weist der Randabschnitt 4 die Aussparung 39, der Randabschnitt 5 die Aussparung 40 und der Randabschnitt 6 die Aussparung 41 auf.

Das in den Fign. 1 und 2 im Detail gezeigte Dosengehäuse 2 ist bevorzugterweise gleichfalls als einstückiges Kunststoffteil ausgebildet. Es stellt in an sich bekannter Weise drei Schraubenkanäle 36 zur Verfügung, die der Aufnahme von Montageschrauben zur Befestigung des Dosengehäuses 2 an einer in den Fign. nicht näher dargestellten Anschluss- oder Montageplatte dienen.

Das Dosengehäuse 2 stellt ferner einen Gelenkansatz 37 zur Verfügung, der der schwenkbaren Anordnung eines in den Fign. gleichfalls nicht näher gezeigten Deckels zum Verschließen des Dosengehäuses 2 dient.

Die Darstellung nach den Fign. 1 und 2 lässt zudem einen Bajonettnocken 38 erkennen, der innenseitig des Dosengehäuses 2 angeordnet ist und dazu dient, mit einem Bajonettring eines in den Fign. nicht näher dargestellten Steckers zusammenzuwirken. Es sind bevorzugterweise mehrere Bajonettnocken 38 vorgesehen, wobei die perspektivische Darstellung nach den Fign. 1 und 2 jeweils nur einen Bajonettnocken 38 erkennen lässt.

Wie insbesondere die Darstellung nach Fig. 2 erkennen lässt, stellt das Dosengehäuse 2 innenseitig einen umlaufenden Ring 34 zur Verfügung, der auch als Haltering bezeichnet werden kann. Im endmontierten Zustand der Steckdose stützt sich der Kontaktträgereinsatz 3 mit seinen Randabschnitten 4, 5 und 6 an diesem Ring 34 ab, und zwar axial in Richtung auf einen in den Fign. nicht gezeigten Dosendeckel, das heißt in Richtung der mit Bezug auf die Blattebene nach Fig. 1 oberen Randkante des Dosengehäuses 2.

Im Bereich eines jeden Schraubenkanals 36 ist jeweils eine sich radial nach innen erstreckende Halteplatte 20 vorgesehen, die in axialer Richtung zum Ring 34 beabstandet sind. Im endmontierten Zustand des Kontaktträgereinsatzes 3 stützt sich dieser gegenüber den Halteplatten 20 axial in Richtung auf eine in den Fign. nicht näher dargestellte Anschluss- oder Montageplatte, das heißt in Richtung auf die mit Bezug auf die Blattebene nach Fig. 2 untere Randkante des Dosengehäuses 2 ab.

Wie die Darstellung nach Fig. 2 ferner erkennen lässt, bilden die Halteplatten 20 und der Ring 34 aufgrund der axial beabstandeten Anordnung der Halteplatten gegenüber dem Ring 34 jeweils einen Spalt zwischen sich aus, der als Aufnahme für die Randabschnitte 4, 5 und 6 zu bezeichnen ist, wobei der gezeigten Darstellung nach der Randabschnitt 4 der Aufnahme 7, der Randabschnitt 5 der Aufnahme 8 und der Randabschnitt 6 der Aufnahme 9 zugeordnet ist, wie dies insbesondere die Darstellungen nach Fig. 5 und 6 erkennen lassen. Im endmontierten Zustand des Kontaktträgereinsatzes 3 sind die sich radial erstreckenden Randabschnitte 4, 5 und 6 des Kontaktträgereinsatzes 3 von den hierzu korrespondierend ausgebildeten Aufnahmen 7, 8 und 9 des Dosengehäuses 2 umgriffen und stützen so den Kontaktträgereinsatz 3 in axialer Richtung 19 gegenüber dem Dosengehäuse 2 ab, und zwar sowohl axial in Richtung auf die obere Randkante als auch in Richtung auf die untere Randkante des Dosengehäuses 2.

Das Dosengehäuse 2 stellt ferner Stege 25 und 26 bereit, die sich radial nach innen erstrecken, wie beispielsweise die Darstellung nach Fig. 2 erkennen lässt. Es sind insgesamt drei Stegpaare 25, 26 vorgesehen, die zwischen sich jeweils Ausnehmungen definieren, und zwar die Ausnehmungen 22, 23 und 24, die in Umfangsrichtung 21 gleich verteilt ausgebildet sind. Die Stege 26 weisen jeweils eine Anlaufschräge 27 auf, deren Funktion im Weiteren noch erläutert werden wird.

Wie insbesondere die Darstellung nach Fig. 6 erkennen lässt, stellt das Dosengehäuse ferner die Nutabschnitte 31, 32 und 33 zur Verfügung, in denen die schon vorerläuterten Fortsätze 28, 29 und 30 der Randabschnitte 4, 5 und 6 des Kontaktträgereinsatzes 3 bei einem in das Dosengehäuse 2 eingesteckten Kontaktträgereinsatz 3 geführt werden. Dabei ist in der beispielhaften Darstellung nach Fig. 6 der Fortsatz 28 dem Nutabschnitt 31, der Fortsatz 29 dem Nutabschnitt 32 und dem Fortsatz 30 der Nutabschnitt 33 zugeordnet.

Ein jeder der Nutabschnitte 31, 32 und 33 ist in Umfangsrichtung 21 begrenzt, und zwar durch Anschläge 43, wobei je Nutabschnitt 31, 32 und 33 einer der Anschläge 43 durch den jeweils zugehörigen Steg 25 gebildet ist, wie sich gleichfalls aus der Darstellung nach Fig. 6 ergibt.

Die Montage von Kontaktträgereinsatz 3 und Dosengehäuse 2 erweist sich aufgrund der erfindungsgemäßen Ausgestaltung denkbar einfach. Diese geht wie folgt von statten:
Der Kontaktträger 3 wird kopfseitig in das Dosengehäuse 2 eingeführt, und zwar ausgehend von der unteren Randkante des Dosengehäuses 2, wie sich aus der Darstellung nach Fig. 6 ergibt. Dabei ist der Kontaktträgereinsatz 3 in Umfangsrichtung 21 derart gegenüber dem Dosengehäuse 2 positioniert, dass die vom Kontaktträgereinsatz 3 bereitgestellten Aussparungen 39, 40 und 41 der Randabschnitte 4, 5 und 6 in axialer Richtung 19 mit den Halteplatten 20 der Aufnahmen 7, 8 und 9 des Dosengehäuses 2 fluchten. In dieser Stellung des Kontaktträgereinsatzes 3 relativ gegenüber dem Dosengehäuse 2 kann der Kontaktträgereinsatz 3 in Axialrichtung 19 so weit in das Dosengehäuse 2 eingesetzt werden, bis die Randabschnitte 4, 5 und 6 des Kontaktträgereinsatzes 3 auf dem vom Dosengehäuse 2 bereitgestellten Ring 34 zur Anlage kommen. Diese Einbausituation, auch "unverrastete" Stellung genannt, ist in Fig. 5 dargestellt.

In einem zweiten und letzten Montageschritt ist der Kontaktträger 3 in Umfangsrichtung 21 relativ gegenüber dem Dosengehäuse 2 zu verdrehen, und zwar in Verdrehrichtung 42, wie sich dies gleichfalls aus Fig. 5 ergibt.

Infolge der Verdrehbewegung in Drehrichtung 42 des Kontaktträgereinsatzes 3 relativ gegenüber dem Dosengehäuse 2 fahren die Randabschnitte 4, 5 und 6 des Kontaktträgereinsatzes 3 in die vom Dosengehäuse 2 bereitgestellten Aufnahmen 7, 8 und 9 ein. Hierdurch wird die axiale Abstützung des Kontaktträgereinsatzes 3 relativ gegenüber dem Dosengehäuse 2 erreicht, wie sich auch aus der Darstellung nach Fig. 6 ergibt, die die Endposition des Kontaktträgereinsatzes 3 gegenüber dem Dosengehäuse 2 zeigt, die auch als "verrastete" Stellung bezeichnet werden kann.

Im Zuge der Verdrehbewegung in Drehrichtung 42 des Kontaktträgereinsatzes 3 relativ gegenüber dem Dosengehäuse 2 werden die von den Federzungen 16, 17 und 18 jeweils getragenen Nocken 13, 14 und 15 über die jeweiligen Anlaufschrägen 27 der zugehörigen Stege 26 gefahren, was aufgrund der federelastischen Ausgestaltung der Federzungen 16, 17 und 18 ein Zurückweichen der Nocken 13, 14 und 15 in radialer Richtung nach innen bewirkt. Sobald die Verdrehbewegung des Kontaktträgereinsatzes 3 relativ gegenüber dem Dosengehäuse 2 die Endstellung erreicht, liegen die Nocken 13, 14 und 15 jeweils fluchtend vor den zugehörigen Ausnehmungen 22, 23 und 24, was aufgrund der federbelasteten Ausgestaltung durch die Federzungen 16, 17 und 18 dazu führt, dass die Nocken 13, 14 und 15 in radialer Richtung nach außen in die jeweils zugehörigen Ausnehmungen 22, 23 und 24 gedrückt werden. Dieser Sachzusammenhang ergibt sich gleichfalls aus der Darstellung nach Fig. 6. Aufgrund der Anordnung der Nocken 13, 14 und 15 in den jeweils zugehörigen Ausnehmungen 22, 23 und 24 ergibt sich eine Verdrehsicherung des Kontaktträgereinsatzes 3 relativ gegenüber dem Dosengehäuse 2. In vorteilhafter Weise ist also eine ungewollte Verdrehbewegung des Kontaktträgereinsatzes 3 gegenüber dem Dosengehäuse 2 nicht mehr möglich, sobald der Kontaktträgereinsatz 3 die in Fig. 6 erreichte Endstellung eingenommen hat.

Um ein zu weites Verdrehen sowohl in die eine als auch in die andere Richtung des Kontaktträgereinsatzes 3 relativ gegenüber dem Dosengehäuse 2 zu vermeiden, sind die von den Randabschnitten 4, 5 und 6 getragenen Fortsätze 28, 29 und 30 vorgesehen, die in den jeweiligen Nutabschnitten 31, 32 und 33 des Dosengehäuses 2 geführt sind und die jeweiligen Endstellungen auf die die Nutabschnitte 31, 32 und 33 jeweils begrenzenden Anschläge 43 auflaufen.

Wie insbesondere die Darstellungen nach den Fign. 5 und 6 erkennen lassen, ermöglicht die erfindungsgemäße Ausgestaltung nicht nur eine einfache Montage von Kontaktträgereinsatz 3 und Dosengehäuse 2, sie erbringt auch den Vorteil, dass bei vergleichsweise geringer Bauhöhe ein hinreichend großer Montageraum zwischen der unteren Randkante des Dosengehäuses und der unteren Randkante des Kontaktträgereinsatzes 3 verbleibt, der es in einfacher Weise ermöglicht, Anschlusskabel rückwärtig aus dem Kontaktträgereinsatz 3 herauszuführen und für einen Abgang aus dem Dosengehäuse 2 durch einen seitlichen Durchbruch 35 umzulenken. Damit gestattet die erfindungsgemäße Steckdosenausbildung auch eine seitliche Kabelabführung aus dem Dosengehäuse 2, ohne dass es zusätzlicher Baukomponenten wie Stützkörper, Stützbeine oder dergleichen bedarf.

### Bezugszeichenliste

- 1: Steckdose
- 2: Dosengehäuse
- 3: Kontaktträgereinsatz
- 4: Randabschnitt
- 5: Randabschnitt
- 6: Randabschnitt
- 7: Aufnahme
- 8: Aufnahme
- 9: Aufnahme
- 10: Grundkörper
- 11: Kodierungsnut
- 12: Durchgangsöffnung
- 13: Nocken
- 14: Nocken
- 15: Nocken
- 16: Federzunge
- 17: Federzunge
- 18: Federzunge
- 19: Axialrichtung
- 20: Halteplatte
- 21: Umfangsrichtung
- 22: Ausnehmung
- 23: Ausnehmung
- 24: Ausnehmung
- 25: Steg
- 26: Steg
- 27: Auflaufschräge
- 28: Fortsatz
- 29: Fortsatz
- 30: Fortsatz
- 31: Nutabschnitt
- 32: Nutabschnitt
- 33: Nutabschnitt
- 34: Ring
- 35: Durchbruch
- 36: Schraubenkanal
- 37: Gelenkansatz
- 38: Bajonettnocken
- 39: Aussparung
- 40: Aussparung
- 41: Aussparung
- 42: Drehrichtung
- 43: Anschlag

## Patentansprüche

1. Steckdose für eine mehrpolige Steckverbindung, insbesondere für den elektrischen Anschluss eines Kraftfahrzeuganhängers an einem Kraftfahrzeug, mit einem Dosengehäuse (2) und einem davon aufnehmbaren Kontaktträgereinsatz (3),
**dadurch gekennzeichnet,**
**dass** der Kontaktträgereinsatz endseitig sich radial erstreckende Randabschnitte (4, 5, 6) aufweist, die im endmontierten Zustand von hierzu korrespondierend ausgebildeten Aufnahmen (7, 8, 9) des Dosengehäuses (2) umgriffen sind und so den Kontaktträgereinsatz in axialer Richtung (19) gegenüber dem Dosengehäuse (2) abstützen.

2. Steckdose nach Anspruch 1, **dadurch gekennzeichnet, dass** der Kontaktträgereinsatz (3) einen radial verfahrbaren Nocken (13, 14, 15) aufweist.

3. Steckdose nach Anspruch 2, **dadurch gekennzeichnet, dass** der Nocken (13, 14, 15) endseitig einer Federzunge (16, 17, 18) angeordnet ist.

4. Steckdose nach Anspruch 3, **dadurch gekennzeichnet, dass** die Federzunge (16, 17, 18) umfangsseitig am Kontaktträgereinsatz (3) zwischen zwei in Umfangsrichtung (21) nebeneinander ausgebildeten Randabschnitten (4, 5, 6) angeordnet ist.

5. Steckdose nach einem der vorhergehenden Ansprüche, **dadurch gekennzeichnet, dass** das Dosengehäuse (2) eine Ausnehmung (22, 23, 24) bereitstellt, in die der Nocken (13, 14, 15) des Kontaktträgereinsatzes (3) im endmontierten Zustand einrastet.

6. Steckdose nach Anspruch 5, **dadurch gekennzeichnet, dass** die Ausnehmung (22, 23, 24) durch zwei in Umfangsrichtung (21) benachbart zueinander ausgebildete Stege (25, 26) gebildet ist.

7. Steckdose nach Anspruch 6, **dadurch gekennzeichnet, dass** einer der beiden Stege (25, 26) eine Anlaufschräge (27) bereitstellt.

8. Steckdose nach einem der vorhergehenden Ansprüche, **dadurch gekennzeichnet, dass** die Randabschnitte (4, 5, 6) jeweils einen sich radial erstreckenden Fortsatz (28, 29, 30) tragen.

9. Steckdose nach Anspruch 8, **dadurch gekennzeichnet, dass** ein jeder Fortsatz (28, 29, 30) in einem zugehörigen Nutabschnitt (31, 32, 33) des Dosengehäuses (2) geführt ist.

10. Steckdose nach Anspruch 9, **dadurch gekennzeichnet, dass** ein jeder Nutabschnitt (31, 32, 33) durch zwei Anschläge (43) begrenzt ist.

11. Steckdose nach Anspruch 10, **dadurch gekennzeichnet, dass** einer der Anschläge (43) durch einen der Stege (25) gebildet ist.

12. Kontaktträgereinsatz (3) mit den Merkmalen nach einem der vorhergehenden Ansprüche.

13. Dosengehäuse (2) mit den Merkmalen nach einem der vorhergehenden Ansprüche 1 bis 11.
